# EUROPEAN PATENT SPECIFICATION

(11) **EP 2 735 080 B1**
(45) Date of publication and mention of the grant of the patent: **25.01.2017**
(21) Application number: 11735391.2
(22) Date of filing: 20.07.2011
(51) Int. Cl.: H02J 13/00, E21B 33/035

(54) **ENERGY AND DATA DISTRIBUTION SYSTEM**
ENERGIE- UND DATENVERTEILUNGSSYSTEM
SYSTÈME DE DISTRIBUTION DE DONNÉES ET D'ÉNERGIE

(43) Date of publication of application: 28.05.2014
(73) Proprietor: Cameron International Corporation, Houston, TX 77027-9109 (US)
(72) Inventor: ZABE, Volker, 31303 Burgdorf (DE)
(74) Representative: Gill Jennings & Every LLP
(86) International application number: PCT/EP2011/003638
(87) International publication number: WO 2013/010563

(56) References cited:
- WO-A1-01/61824
- WO-A1-03/073182
- WO-A2-2006/128886

## Description

The present invention relates to an energy and data distribution system comprising at least one monitoring and supply unit connected via a cable connected to at least one power control and communications unit, arranged particularly in areas difficult to access, such as on the seafloor, wherein the power control and communications unit is connected to a number of on-site control means, each of which being assigned at least to a conveying assembly for oil and gas extraction having respective means such as valves, throttles, BOPs and the like.

The monitoring and supply unit is usually arranged onshore or above sea level. From this unit a transfer of energy and signals or data is implemented via the respective cable connection to the power control and communications unit. There, an adaptation of the energy usually takes place, particularly with respect to voltage and/or current for each of the subordinate on-site control means. Such a conversion for instance comprises a transformation of the voltage to other values.

The respective on-site control means is connected to the power control and communications unit to also transmit energy and data/signals. The on-site control means serves for supplying and monitoring the respective conveying assembly (tree) with the respective units. Such units, such as valves, throttles, BOPs and the like usually comprise associated actuators that are electrically operable to adjust the respective unit by means of on-site control means.

Respective energy and data distribution systems are described in WO 2008/125137A1 or WO 2008/145160A1.

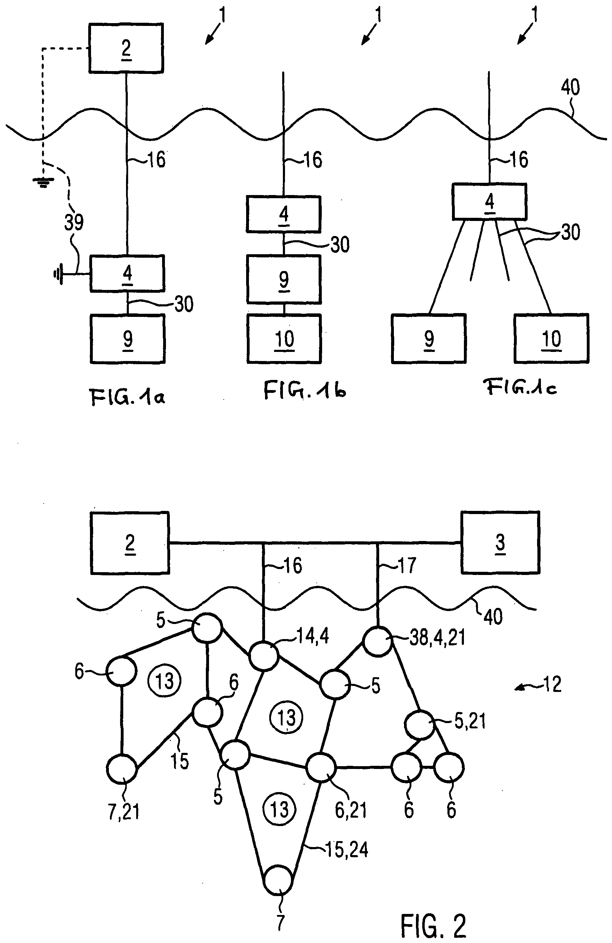

The basic arrangements of different units of such a system are shown in Fig. 1a) to 1c). Such systems particularly also serve for the respective supply of several conveying assemblies in oil and gas extraction, which are sometimes arranged at large distances to each other. In Fig. 1a a monitoring and supply unit 2 is arranged on the sea surface 40. This unit transmits via a respective cable connection 16 voltage and data or signals to a power control and communications unit 4. A conversion of a voltage supply of some kV into a voltage of several hundred V usually takes place in the power control and communications unit, which is then transmitted via a further connection to the respective on-site control means 9. The transmission of data/signals is usually implemented via the same connection. The on-site control means 9 is associated to a conveying assembly, also referred to as tree, and serves there as a control of e.g. actuators of valves, throttles, BOPs and the like. A respective return from the power control and communications unit 4 to the monitoring and supply unit 2 takes place over the sea water, see reference numeral 39.

Such an energy and data distribution system is known from the above-mentioned WO 2008/125137A1

Fig. 1b and 1c are for instance described in WO 2008/145160A1. These energy and data distribution systems 1 differ from the system according to Fig. 1a by a serial or parallel arrangement of two or more on-site control means 9, 10 with respect to the respective power control and communications unit 4. Combinations of parallel/serial arrangements of Fig. 1b and 1c are also possible.

The known energy and data distribution systems are already suitable for larger oil or natural gas fields, wherein particularly in the embodiments according to Fig. 1b or 1c a plurality of trees can be supplied via one cable connection 16 only.

However, a plurality of units or devices are still required and separate distribution points or additional supply units must partly be provided. Furthermore, an expandability is difficult or even impossible.

Thus, the object of the invention is to improve an energy and data distribution system of the above-mentioned kind in that an expandability is possible in a simple and very flexible manner and at the same time a respective supply of a plurality of trees is also possible over larger distances.

This object is solved by the features of claim 1.

The energy and data distribution system according to the invention is particularly characterized in that a number of power control and communications units in a network are each connected to at least one further power control and communications unit via one node associated to the respective power control and communications unit, and at least one power control and communications unit or a node of the network is connected to the monitoring and supply unit via the cable connections.

Such a network is composed of a plurality of elements, see power control and communication units, the nodes, which are connected to one another by means of connections (edges). These connections are formed by respective connection lines. A closed combination composed of such edges and nodes is designated as mesh. At least one power control and communication unit is associated to each of the nodes, with a number of on-site control means being supplied by the power control and communications unit. The nodes can be realized by a terminal or the like of the power control and communication unit to which a cable for power and/or data transmission may be connected as a corresponding connection line. The node may also be some distribution box, to which at least one power control and communication unit can be connected.

The network structure leads to a simple expandability and the energy and data distribution system according to the invention is very flexible and can be adapted at relatively low cost to various numbers of conveying assemblies and the like. Particularly in the case of larger oil and natural gas fields, significant advantages result, since for instance the amount of connection lines is relatively small and each possible oil and natural gas field can optimally be supplied with assemblies.

The adaptability of the network particularly also results from the fact that the power control and communications unit can be connected in parallel and/or serial in the network.

In order to be able to connect in a simple manner each power control and communications unit with respective connection lines, this unit can comprise a power/signal plug connection means as a terminal or the like. This enables in a simple manner respective connections between the node and the power control and communications unit and also between the power control and communications unit and on-site control means or between several power control and communications units.

If several power control and communications units are connected in parallel, the use of a distribution means or box possibly proves to be advantageous. Through this means, data/signals and voltages can, if necessary, be distributed onto the respective power control and communications units.

Concerning the network, different topologies or connections in the network are conceivable. Respective network topologies are for instance bus networks, ring networks, star networks and the like. Combinations of such topologies are also possible. The network can also be a so-called degenerated network, i.e. edges can be missing, so that the network is not only formed of meshes.

Specifically in larger networks it can also prove to be an advantage if for instance a device termed as hub is used, wherein this usually takes place in star networks. Such a hub being an active network participant can amplify signals or being a passive switching center it can merely forward signals passing through the network.

Further possible networks are so-called peer-to-peer networks or also client-server networks. The network can also contain further means, such as switches, repeaters, routers and the like.

On the whole a very favorable adaptability of the network results according to the invention, as described above, i.e. a respective upward scaling or downward scaling, depending on expansion or reduction of the network, see adding of further nodes and/or connections between the nodes or vice versa.

In this respect, it must particularly be noted that the network according to the invention is a network for distributing energy and data/signals, wherein the possibility also exits that the networks differ for distributing energy and for distributing data/signal, i.e. separately form a node, edges or meshes.

A power control and communications unit with a number of on-site control means connected therewith is usually associated to a node. A group of such units forms a cluster of the network.

In order to generally simplify the installation of different devices and means, the node can be integrated in the power control and communications unit according to one embodiment. The number of the on-site control means associated to each power control and communications unit is usually determined by the power available so that for instance 1 to 8 on-site control means can be associated to a power control and communications unit, which means to one node.

At this point it must explicitly be pointed out that by the energy and data distribution system according to the invention, a plurality of power control and communications units with on-site control means connected thereto can usually be supplied by only one cable connection to the monitoring and supply unit. This significantly reduces the expenditure of wiring without variability of the energy and data distribution system being limited.

In a separate node or also in nodes integrated into the power control and communications unit it also proves to be advantageous if such a node has a power distribution means, which can for instance comprise switches, fuses and the like. In this manner it is ensured that for instance power that is not too high is transmitted to a power control and communications unit or also to a respective on-site control means. Furthermore, a fast switching can take place to supply power if necessary.

The node can also comprise a measuring means in order to measure for instance the respective voltages, currents and the like. A feedback about the parameters measured can be carried out via the cable connection to the monitoring and supply unit of the energy and data distribution system.

The possibility also exists that an independent supply with respect to voltage/current is assigned to each node, or such a supply comes from the power control and communications unit. Furthermore, the possibility exists that the node already implements a selection of the data/signals and transfers them to further nodes and to the connected power control and communications unit.

The connection lines between the different devices or means of the network can be formed analogously to the connection lines described in WO 2008/145160A1 or WO 2008/125137A1. A connection line between clusters or nodes can for instance comprise an optical waveguide and a voltage supply line. They can be realized by a cable or also by separate cables. Analogously, a connection line between the node and the power control and communications unit can comprise a data bus line and a voltage supply line, wherein these lines can again be realized by a cable or by separate cables. This also applies to a connection line between the power control and communications units and the on-site means, wherein said connection line can for instance comprise a data bus line and a voltage supply line.

The data bus line between the node and the power control and communications unit is usually an Ethernet data bus line, and the data bus line between the power control and communications unit and the on-site control means is a CAN data bus line.

As a further advantage according to the invention it results that a redundancy exists in networks that are not fully degenerated, so that the respective networks depending on the degeneration degree are between 1-fold redundant and 3-fold redundant. This redundancy is basically freely selectable, depending on the degeneration degree of the network built up. 1-fold redundant is for instance a ring network and 3-fold redundant is a non-degenerated network.

A simple possibility to expand or reduce the network is if a respective node is designed in a switchable manner. That means further connections to the node, particularly from other nodes, can easily be activated or also separated.

In order to be able to perform a simple variation of the network on the sea ground, a respective connection line can be connectable via a plug connection means or other terminal. For instance each of the power control and communications units or nodes can comprise at least four of such plug connection means.

As stated above, the network according to the invention does not only serve for data distribution but particularly for power distribution. In order to ensure in this context that the power is distributed relatively uniformly onto the different power control and communications units, a voltage compensation means can be integrated in the respective cluster, particularly in the power control and communications unit. Such a voltage compensation means can be realized in different ways. One option is the use of at least one Zener diode with an adjustable Zener characteristic. As a result the voltage is controllable.

A further option is the use of at least one controllable series resistor or a start supply modification means. The start modification means serves for being able to start all power control and communications units simultaneously, wherein this also applies to the later connected power control and communications units. Such a start supply modification means can for instance be formed in that the respective voltage is lower during the start of a Zener diode and only if the power control and communications unit operates constantly it is switched to the nominal voltage.

It was already mentioned above that the network can per se be formed redundantly in different ways. Specifically with oil and natural gas extraction a redundancy with respect to the supply of the monitoring and supply unit is generally advantageous. This can for instance be achieved by connecting two monitoring and supply units having one cable connection each with a respective node of the network.

It was also already pointed out that the respective power control and communications unit can comprise a router for distributing data/signals to the respective on-site control means. The connection between these means can furthermore be implemented via a respective data bus connection, such as a field bus, CAN bus and the like. Due to the distribution by means of the router, more devices can be connected, such as 8, 9, 10 or more. The router can be formed as a so-called backbone or also as a software router.

The option further exists that a faster optics modem is associated to the router. By this modem, the conversion of the optically transmitted data into electrical signals takes place, which can then be distributed by the router to the various on-side control units.

An advantageous embodiment of the invention will now be explained by means of the Figures shown in the drawing.
Fig. 1 a to 1c show schematic illustrations of known energy and data distribution systems;
Fig. 2 shows a schematic diagram of an embodiment of the energy and data distribution system according to the invention.
Fig. 3 shows a schematic diagram of a node with the associated cluster of the network according to Fig. 2, and
Fig. 4 shows a side view of two power control and communications units of the network according to Fig. 2.

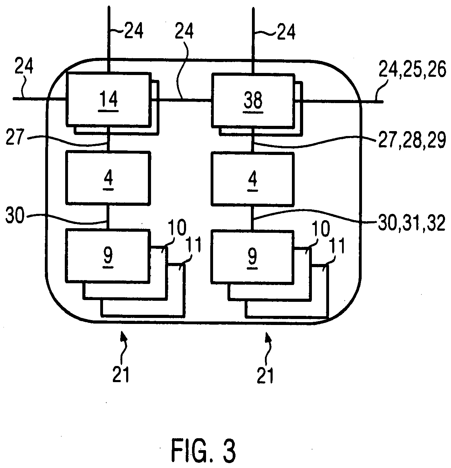

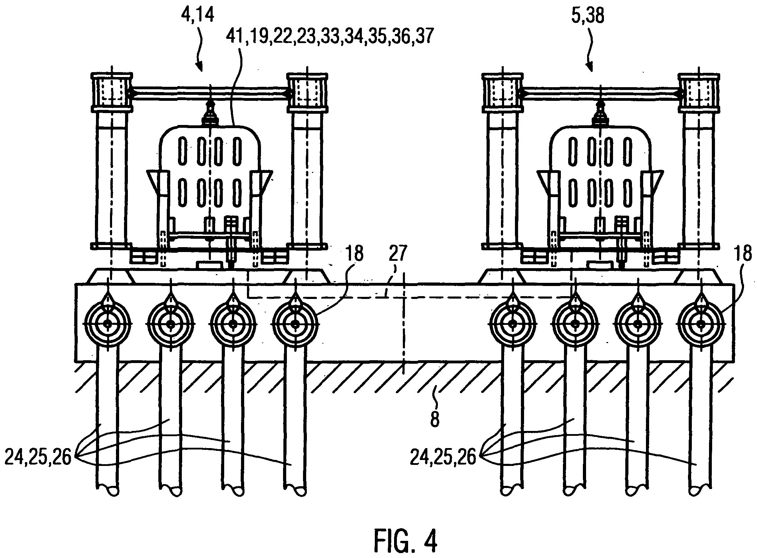

Fig. 2 shows the schematic diagram of the energy and data distribution system 1 according to the invention in which a plurality of power control and communications units and respective nodes 14 are arranged in a network 12. The network 12 comprises a number of meshes 13 formed by the nodes and the power control and communications units 4, 5, 6 and 7 and the edges 15 connecting the power control and communications units. Such an edge 15 corresponds to a connection line 24, see Fig. 3 and 4, which transmits both power and also data/signals between the different nodes 14 or power control and communications units 4, 5, 6 and 7. It is possible, also see the following statements, that the respective node 14 and 38, respectively, is formed by a power control and communications unit 4. At two nodes 14 and 38 the network 12 is connected by means of respective cable connections 16 and 17 to a monitoring and supply means 2 and 3 above the sea surface 40. A respective water feedback line 39, see Fig. 1, is not shown in Fig 2 to simplify matters. Via the cable connections 16 and 17 a transfer of voltage and signals/data from the respective monitoring and supply unit 2 and 3 to the network 12 takes place. The energy and data distribution system 1 according to the invention is formed redundantly by the two monitoring and supply units 2, 3 with the respective cable connection.

Some of the nodes 14 and 38 in the network 12 are directly shown by the power control and communications units 4, 5, 6 and 7, wherein a respective reference numeral for the nodes was omitted to simplify matters. The different nodes or power control and communications units 4, 5, 6 and 7 are connected to one another by respective connection lines 24 as edges 15. Each of the power control and communications unit and also each node can be connected to a plurality of adjoining nodes or means.

The network according to Fig. 2 can be formed as a degenerated network, wherein possible connections between the nodes are omitted. Furthermore, the network can have various topologies, see for instance serial, parallel, ring, star or also combinations of these topologies.

Furthermore, it must be noted that each of the nodes 14, 38 or power control and communications units 4, 5, 6, and 7 shown in the network substantially corresponds to a cluster 21, see Fig. 3, wherein such a cluster, except for the above-mentioned members, also comprises respective on-site control units 9, 10, 11, see again Fig. 3, which are not shown any closer in Fig. 2 to simplify matters.

Besides the redundancy caused by the double arrangement of the monitoring and supply units 2 and 3 and the respective cable connections 16, 17, a further redundancy is achieved by the respective degeneration degree of the network 12. The respective network can be between 1-fold redundant, see for instance ring network up to 3-fold redundant, see a non-degenerated network, freely scalable.

Respective additional wirings in the field, i.e. on the sea ground, are not required due to this network redundancy.

In the case of networks that are not degenerated to a large extent, it is also advantageous that power loss reduces by parallel circuits of connection lines. In further expanded arrangements this is a special advantage of the invention.

The network 12 according to Fig. 2 is easily expandable, in that for instance further clusters are added or existing clusters and connections are varied. This particularly applies in switchable nodes.

Fig. 3 shows a respective cluster 21 with a node 14 and 38, power control and communication unit 4 as well as a number of on-site control units 9,10 and 11. In terms of performance, usually 1 to 8 on-site control means 9, 10 and 11 can be associated to one power control and communications unit. To simplify matters, three such on-site control means are shown in Fig 3. The nodes 14 and 38 are connected to further nodes and clusters by means of connection lines 24, see again Fig. 2. Such a connection line 24 usually comprises an optical waveguide 25 and a voltage supply line 26. The connection line 27 from the node 14 and 38 and power control and communications unit 4 comprises a data bus line 28 and a voltage supply line 29. The data bus line 28 can for instance be an Ethernet data bus line.

The further connection line 30 between the power control and communications unit 4 from the respective on-site control means 9 comprises a further data bus line 31 and a voltage supply line 32. The data bus line 31 can for instance be a CAN data bus line.

It must again be pointed out that the respective nodes 14, 38 can be integrated in the respective power control and communications unit 4. In this case connection lines 27 instead of the respective connection line are provided directly between the power control and communications units 4.

A separate node or also a node integrated in the power control and communications unit 4, 5, 6 and 7 contains various components, such as a distribution means 19, a power distribution means 22 or a measuring means 23. The power distribution means 22 comprises at least a number of switches and fuses that allow the distribution of the voltage to the different adjoining nodes and which avoid excessive voltage. The respective measuring means 23 for instance serves for measuring voltage and/or current. A feedback about the parameters measured can be implemented via the cable connection 16 and 17 to the monitoring and supply unit 2 and 3, see Fig. 2 and 4.

The respective power control and communications unit 4, 5, 6 and 7 can comprise further components, such as a voltage compensation means 33, a router 34 or a fiber optics modem, see also Fig. 4. The voltage compensation means 33 serves for the uniform distribution of voltage or current to the different power control and communications units. Such a voltage compensation unit 33 can be formed in various manners. One option is the use of a Zener diode with an adjustable Zener characteristic, through which a respective output voltage can be controlled. A further option is a controllable series resistor or also a start supply modification means 37, see again Fig. 4. Concerning the controllable series resistor, it has to be noted that this resistor can for instance also be realized by a Zener diode circuit. In the start supply modification means 37 a start supply of the power control and communications means is modified such that all these means can start. This also applies to the possibly later connected power control and communications means. This can for instance be implemented in that first of all a voltage during start-up is lower and only if for instance a respective converter 41 of the power control and communications unit 4 operates constantly it is switched to the normal voltage.

Fig. 4 shows a side view of respective power control and communications units 4 and 5. In these units a node 14 and 38 with elements can be integrated, see also the above statements.

The connection line 24 composed of optical waveguide 25 and voltage supply line 26 extends between the two power control and communications units 4 and 5.

A number of connection lines 18 are associated to each of the power control and communications units 4, 5 to which said connection lines respective connection lines 24 to further nodes or power control and communications units can be connected in a simple manner, see also Fig. 2. The respective power control and communications units 4 and 5 are arranged on the sea ground 8 and are connected there by means of the connection line 24 and further connection lines 30, see also Fig. 3, with the respective on-site connection means 9, 10 and 11.

Each of the respective power control and communications units 4, 5, 6 and 7, see also the preceding Figures, comprises the various components, see router 34, fiber optics modem 35, Zener diode 36 as part of the voltage compensation means 33, or start modification means 37, wherein respective parts of the node also exist, such as power distribution means 22 and measuring means 23, and also a respective distribution means 19 is provided.

In conclusion it results that in the energy and data distribution system according to the invention the number of cables is minimized in respective cable connections for power supply and for transmitting data/signals. The redundancy of the respective network is freely scalable depending on the degree of degeneration, and a redundant wiring directly on site can be dispensed with. Furthermore reduced power loss results by parallel switching of connection lines in networks that are not degenerated to a large extent. The network is also easily expandable and existing connection lines or connections can easily be modified.

According to the network and corresponding ring structures, see for example reference numeral 13 in figure 2, it will be possible to supply energy or data to all of the corresponding nodes or power control and communication units, even if one of such a node has a failure, it would still be possible to supply energy to all of the other nodes.

Furthermore, the number of connection lines is reduced, as not all of the nodes or power control and communication units are connected by such lines.

If further power control and communication units with their onsite control means are needed, it is always possible to expand the network by adding such nodes and connecting same to other nodes that are already connected to monitoring and supply units 2, 3, see figure 2. Furthermore, it is easily possible to change existing connections, which means that other nodes are connected to each other, or additional connections are added.

Furthermore, according to the network structure, there is already redundancy, which means that monitoring and supply units 2, 3 are both connected to all of the corresponding nodes or power control and communication units, such that any failure of one of the monitoring and supply units is easily compensated without any additional cable connections or change of such cable connections. Of course, any additional node or connection line would slightly change the network, such that other connections are provided, so that other units like a power control and communication unit can be added or connected to other units, etc.

Each of the power control and communication units can then control its associated on-site control means, but the overall system is more easily adaptable with respect to different oil field sizes or production amounts. Power control and communication units can be added to correspond to such new field layouts or production rates. It is not necessary to connect all such power control and communication units with the monitoring and supply unit, but only with at least one available node or power control and communication unit associated with this node. Each newly arranged power control and communication unit is then controllable by the monitoring and supply unit, and power is supplied to same.

Summarizing, according to the present application, additional units can easily be added, existing connections can be changed, and in view of redundancy, it is only necessary to provide two monitoring and supply units, as those are already connected with all of the units.

## Claims

1. Energy and data distribution system (1) comprising at least one monitoring and supply unit (2, 3) which is connected via a cable connection (16, 17) to at least two power control and communications units (4, 5, 6, 7), wherein at least one is arranged particularly in areas that are difficult to access, such as on the sea ground, wherein at least one of said power control and communications unit (4, 5, 6, 7) is connected to a number of on-site control means (9, 10, 11), each of which being associated to at least one conveying assembly for oil or gas extraction with the respective means, such as valves, throttles, BOPs and the like, **characterized in that** a number of said power control and communications units (4, 5, 6, 7) are arranged in a network (12) and are connected to at least one further power control and communications unit (4, 5, 6, 7) via a node (14) associated to the respective power control and communications unit (4, 5, 6, 7), and at least one power control and communications unit (4, 5, 6, 7) or one node (14) of the network (12) is connected via the cable connection (16, 17) to the monitoring and supply unit (2).

2. Energy and data distribution system as claimed in claim 1, **characterized in that** the power control and communications units (4, 5, 6, 7) are connected in the network (12) in parallel and/or in series.

3. Energy and data distribution system as claimed in claim 1 or 2, **characterized in that** the power control and communications unit (4, 5, 6, 7) comprises a line/signal plug connection means (18), and/or a distribution means (19).

4. Energy and data distribution system as claimed in any one of the preceding claims, **characterized in that** the network (12) is a degenerated network, and/or a bus, ring or star network, and/or wherein the network (12) comprises at least one hub.

5. Energy and data distribution system as claimed in any one of the preceding claims, **characterized in that** a power control and communications unit (4, 5, 6, 7) with on-site control means (9, 10, 11) associated thereto forms a cluster (21) of the network (12).

6. Energy and data distribution system as claimed in any one of the preceding claims, **characterized in that** the node (14) is integrated in a power control and communications unit (4, 5, 6, 7), and/or comprises a power distribution means (22) particularly with switches, fuses and the like, and/or comprises at least one measuring means (23) particularly for voltage and/or current.

7. Energy and data distribution system as claimed in any one of the preceding claims, **characterized in that** a connection line (24) between clusters (21) and/or nodes (14) comprises an optical wave guide connection and a voltage supply connection.

8. Energy and data distribution system as claimed in any one of the preceding claims, **characterized in that** a connection line (27) between the node (14) and the power control and communications unit (4, 5, 6, 7) comprises a data bus line (28) and a voltage supply line (29).

9. Energy and data distribution system as claimed in any one of the preceding claims, **characterized in that** a connection line (30) between the power control and communications unit (4, 5, 6, 7) and the on-site control unit (9) comprises a data bus line (31) and a voltage supply line (32).

10. Energy and data distribution system as claimed in any one of the preceding claims, **characterized in that** the node (14) has its own power supply, and/or is formed in a switchable manner to expand the network (12).

11. Energy and data distribution system as claimed in any one of the preceding claims, **characterized in that** the network (12) is formed 1-fold to 3-fold redundant.

12. Energy and data distribution system as claimed in any one of the preceding claims, **characterized in that** the connection line (24, 27, 30) can be connected via a plug connection means (18).

13. Energy and data distribution system as claimed in any one of the preceding claims, **characterized in that** a voltage compensation means (33) is integrated in the cluster (21) and particularly in the power control and communications unit (4, 5, 6, 7).

14. Energy and data distribution system as claimed in any one of the preceding claims, **characterized in that** the voltage compensation unit (33) comprises at least one Zener diode (36) with an adjustable Zener characteristic, and/or at least one controllable series resistor, and/or a start supply modification means (37).

15. Energy and data distribution system as claimed in any one of the preceding claims, **characterized in that** the energy and data distribution system (1) is formed redundant with at least two monitoring and supply units (2, 3) with one cable connection (16, 17) each to one node (14, 28) each of the network (12).

16. Energy and data distribution system as claimed in any one of the preceding claims, **characterized in that** each power control and communications unit (4, 5, 6, 7) comprises at least four plug connection means (8), and/or least one router (34) for distributing data/signals to the respective on-site control units (9, 10, 11).

17. Energy and data distribution system as claimed in any one of the preceding claims, **characterized in that** a fiber-optics modem (35) is associated to the router.

## Patentansprüche

1. Energie- und Datenverteilungssystem (1), umfassend mindestens eine Überwachungs- und Versorgungseinheit (2, 3), die über eine Kabelverbindung (16, 17) an mindestens zwei Leistungsregel- und Kommunikationseinheiten (4, 5, 6, 7) angeschlossen ist, wobei mindestens eine in schwer zugänglichen Bereichen, wie zum Beispiel am Meeresboden, angeordnet ist, wobei mindestens eine der besagten Leistungsregel- und Kommunikationseinheiten (4, 5, 6, 7) an eine Anzahl von Onsite-Steuermitteln (9, 10, 11) angeschlossen ist, die jeweils mit mindestens einer Förder-Baugruppe für Erdöl- oder Erdgasgewinnung mit betreffenden Mitteln, wie zum Beispiel Ventilen, Drosseln, Preventern und dergleichen, verbunden sind, **dadurch gekennzeichnet, dass** eine Anzahl der besagten Leistungsregel- und Kommunikationseinheiten (4, 5, 6, 7) in einem Netzwerk (12) angeordnet und und über einen mit der betreffenden Leistungsregel- und Kommunikationseinheit (4, 5, 6, 7) verbundenen Knoten (14) an mindestens eine weitere Leistungsregel- und Kommunikationseinheit (4, 5, 6, 7) angeschlossen ist, und dass mindestens eine Leistungsregel- und Kommunikationseinheit (4, 5, 6, 7) oder ein Knoten (14) des Netzwerks (12) über die Kabelverbindung (16, 17) an die Überwachungs- und Versorgungseinheit (2) angeschlossen ist.

2. Energie- und Datenverteilungssystem nach Anspruch 1, **dadurch gekennzeichnet, dass** die Leistungsregel- und Kommunikationseinheiten (4, 5, 6, 7) im Netzwerk (12) parallel und/oder in Reihe geschaltet sind.

3. Energie- und Datenverteilungssystem nach Anspruch 1 oder 2, **dadurch gekennzeichnet, dass** die Leistungsregel- und Kommunikationseinheit (4, 5, 6, 7) ein Leitungs/Signal-Steckverbindungsmittel (18) und/oder ein Verteilungsmittel (19) umfasst.

4. Energie- und Datenverteilungssystem nach einem der vorhergehenden Ansprüche, **dadurch gekennzeichnet, dass** das Netzwerk (12) ein entartetes Netzwerk und/oder ein Bus-, Ring- oder Sternnetzwerk ist, und/oder dass das Netzwerk (12) mindestens eine Nabe umfasst.

5. Energie- und Datenverteilungssystem nach einem der vorhergehenden Ansprüche, **dadurch gekennzeichnet, dass** eine Leistungsregel- und Kommunikationseinheit (4, 5, 6, 7) mit damit verbundenen Onsite-Steuermitteln (9, 10, 11) einen Cluster (21) des Netzwerks (12) bildet.

6. Energie- und Datenverteilungssystem nach einem der vorhergehenden Ansprüche, **dadurch gekennzeichnet, dass** der Knoten (14) in eine Leistungsregel- und Kommunikationseinheit (4, 5, 6, 7) integriert ist und/oder ein Leistungsverteilungsmittel (22), insbesondere mit Schaltern, Sicherungen und dergleichen, umfasst und/oder mindestens ein Messmittel (23), insbesondere für Spannung und/oder Strom, umfasst.

7. Energie- und Datenverteilungssystem nach einem der vorhergehenden Ansprüche, **dadurch gekennzeichnet, dass** eine Verbindungsleitung (24) zwischen Clustern (21) und/oder Knoten (14) eine Lichwellenleiterverbindung und eine Spannungsversorgungsverbindung umfasst.

8. Energie- und Datenverteilungssystem nach einem der vorhergehenden Ansprüche, **dadurch gekennzeichnet, dass** eine Verbindungsleitung (27) zwischen dem Knoten (14) und der Leistungsregel- und Kommunikationseinheit (4, 5, 6, 7) eine Datenbusleitung (28) und eine Spannungsversorgungsleitung (29) umfasst.

9. Energie- und Datenverteilungssystem nach einem der vorhergehenden Ansprüche, **dadurch gekennzeichnet, dass** eine Verbindungsleitung (30) zwischen der Leistungsregel- und Kommunikationseinheit (4, 5, 6, 7) und der Onsite-Steuereinheit (9) eine Datenbusleitung (31) und eine Spannungsversorgungsleitung (32) umfasst.

10. Energie- und Datenverteilungssystem nach einem der vorhergehenden Ansprüche, **dadurch gekennzeichnet, dass** der Knoten (14) seine eigene Stromversorgung hat und/oder zur Erweiterung des Netzwerks (12) schaltbar ausgebildet ist.

11. Energie- und Datenverteilungssystem nach einem der vorhergehenden Ansprüche, **dadurch gekennzeichnet, dass** das Netzwerk (12) einfach bis dreifach redundant ausgebildet ist.

12. Energie- und Datenverteilungssystem nach einem der vorhergehenden Ansprüche, **dadurch gekennzeichnet, dass** die Verbindungsleitung (24, 27, 30) über ein Steckverbindungsmittel (18) angeschlossen werden kann.

13. Energie- und Datenverteilungssystem nach einem der vorhergehenden Ansprüche, **dadurch gekennzeichnet, dass** ein Spannungsausgleichmittel (33) in den Cluster (21) und insbesondere in die Leistungsregel- und Kommunikationseinheit (4, 5, 6, 7) integriert ist.

14. Energie- und Datenverteilungssystem nach einem der vorhergehenden Ansprüche, **dadurch gekennzeichnet, dass** die Spannungsausgleicheinheit (33) mindestens eine Zenerdiode (36) mit einstellbarer Zenerkennlinie und/oder mindestens einen regelbaren Vorschaltwiderstand und/oder ein Startversorgungs-Modifiziermittel (37) umfasst.

15. Energie- und Datenverteilungssystem nach einem der vorhergehenden Ansprüche, **dadurch gekennzeichnet, dass** das Energie- und Datenverteilungssystem (1) redundant ausgebildet ist, mit mindestens zwei Überwachungs- und Versorgungseinheiten (2, 3) mit jeweils einer Kabelverbindung (16, 17) an jeweils einen Knoten (14, 28) des Netzwerks (12).

16. Energie- und Datenverteilungssystem nach einem der vorhergehenden Ansprüche, **dadurch gekennzeichnet, dass** jede Leistungsregel- und Kommunikationseinheit (4, 5, 6, 7) mindestens vier Steckverbindungsmittel (8) und/oder mindestens einen Router (34) zur Verteilung von Daten/Signalen an die betreffenden Onsite-Steuereinheiten (9, 10, 11) umfasst.

17. Energie- und Datenverteilungssystem nach einem der vorhergehenden Ansprüche, **dadurch gekennzeichnet, dass** mit dem Router ein Lichtwellenleiter-Modem (35) verbunden ist.

## Revendications

1. Système de distribution de données et d'énergie (1) comportant au moins une unité de contrôle et d'alimentation (2, 3) qui est connectée au moyen d'un câble de raccordement (16, 17) au moins à deux unités de régulation de puissance et de communications (4, 5, 6, 7), **caractérisé en ce qu'**au moins l'une de ces unités est disposée particulièrement dans des zones d'accès difficile, par exemple le fond de la mer, **caractérisé en ce qu'**au moins l'une de ces unités de régulation de puissance et de communications (4, 5, 6, 7) est raccordée à plusieurs moyens de régulation dans le site (9, 10, 11), chacun d'eux étant associé au moins à un ensemble de transport pour l'extraction du pétrole ou du gaz à l'aide du moyen respectif, comme par exemple des vannes, des papillons, des blocs obturateurs BOP et autres éléments similaires, **caractérisé en ce que** plusieurs de ces unités de régulation de puissance et de communications (4, 5, 6, 7) sont disposées dans un réseau (12) et sont connectées au moins à une autre unité de régulation de puissance et de communications (4, 5, 6, 7) par l'intermédiaire d'un noeud (14) associé à l'unité respective de régulation de puissance et de communications (4, 5, 6, 7), et au moins une unité de régulation de puissance et de communications (4, 5, 6, 7) ou un noeud (14) du réseau (12) est connecté au moyen du câble de raccordement (16, 17) à l'unité de contrôle et d'alimentation (2).

2. Système de distribution de données et d'énergie selon la revendication 1, **caractérisé en ce que** les unités de régulation de puissance et de communications (4, 5, 6, 7) sont connectées au réseau (12) en parallèle et/ou en série.

3. Système de distribution de données et d'énergie selon la revendication 1 ou 2, **caractérisé en ce que** l'unité de régulation de puissance et de communications (4, 5, 6, 7) comprend un line/signal plug connection means (18) et/ou un moyen de distribution (19).

4. Système de distribution de données et d'énergie selon l'une quelconque des revendications précédentes, **caractérisé en ce que** le réseau (12) est un réseau dégénéré, et/ou un réseau en bus, en triangle ou en étoile, et/ou **caractérisé en ce que** le réseau (12) comprend au moins un concentrateur.

5. Système de distribution de données et d'énergie selon l'une quelconque des revendications précédentes, **caractérisé en ce qu'une** unité de régulation de puissance et de communications (4, 5, 6, 7) et un moyen de régulation dans le site (9, 10, 11) qui y est associé forme une grappe (21) du réseau (12).

6. Système de distribution de données et d'énergie selon l'une quelconque des revendications précédentes, **caractérisé en ce que** le noeud (14) est intégré dans une unité de régulation de puissance et de communications (4, 5, 6, 7) et/ou **en ce qu'**il comprend un moyen de distribution d'énergie (22) doté particulièrement de commutateurs, de fusibles et autres éléments similaires, et/ou **en ce qu'**il comprend au moins un moyen de mesure (23) particulièrement de tension et/ou de courant.

7. Système de distribution de données et d'énergie selon l'une quelconque des revendications précédentes, **caractérisé en ce qu'une** ligne de raccordement (24) entre les grappes (21) et/ou les noeuds (14) comprend un guide d'onde optique et un raccordement d'alimentation de tension.

8. Système de distribution de données et d'énergie selon l'une quelconque des revendications précédentes, **caractérisé en ce qu'une** ligne de raccordement (27) entre le noeud (14) et l'unité de régulation de puissance et de communications (4, 5, 6, 7) comprend une ligne bus de données (28) et une ligne d'alimentation de tension (29).

9. Système de distribution de données et d'énergie selon l'une quelconque des revendications précédentes, **caractérisé en ce qu'une** ligne de raccordement (30) entre l'unité de régulation de puissance et de communications (4, 5, 6, 7) et le moyen de régulation dans le site (9) comprend une ligne bus de données (31) et une ligne d'alimentation de tension (32).

10. Système de distribution de données et d'énergie selon l'une quelconque des revendications précédentes, **caractérisé en ce que** le noeud (14) comporte sa propre alimentation d'énergie électrique, et/ou **en ce qu'**il est réalisé de manière commutable afin de développer le réseau (12).

11. Système de distribution de données et d'énergie selon l'une quelconque des revendications précédentes, **caractérisé en ce que** le réseau (12) est formé avec une simple redondance (comme par exemple une redondance en anneau) allant jusqu'à une triple redondance (comme par exemple une redondance de réseau non dégénéré).

12. Système de distribution de données et d'énergie selon l'une quelconque des revendications précédentes, **caractérisé en ce que** la ligne de raccordement (24, 27, 30) peut être connectée au moyen d'un moyen de raccordement par fiche (18).

13. Système de distribution de données et d'énergie selon l'une quelconque des revendications précédentes, **caractérisé en ce qu'un** moyen de compensation de tension (33) est intégré dans la grappe (21) et plus particulièrement dans l'unité de régulation de puissance et de communications (4, 5, 6, 7).

14. Système de distribution de données et d'énergie selon l'une quelconque des revendications précédentes, **caractérisé en ce que** l'unité de compensation de tension (33) comprend au moins une diode Zener (36) ayant une caractéristique Zener ajustable, et/ou au moins une résistance série contrôlable, et/ou un moyen de début d'alimentation simultané des unités (37).

15. Système de distribution de données et d'énergie selon l'une quelconque des revendications précédentes, **caractérisé en ce que** le système de distribution d'énergie et de données (1) est mis en redondance avec au moins deux unités de contrôle et d'alimentation (2, 3) un câble de raccordement (16, 17) se rendant chacun à un seul noeud (14, 28) du réseau (12).

16. Système de distribution de données et d'énergie selon l'une quelconque des revendications précédentes, **caractérisé en ce que** chaque unité de régulation de puissance et de communications (4, 5, 6, 7) comprend au moins quatre moyens de raccordement par fiche (8) et/ou au moins un routeur (34) servant à distribuer les données/les signaux aux unités respectives de régulation dans le site (9, 10, 11).

17. Système de distribution de données et d'énergie selon l'une quelconque des revendications précédentes, **caractérisé en ce qu'un** modem (35) à fibre optique est associé au routeur.
